# EUROPEAN PATENT APPLICATION

(11) **EP 2 524 594 A1**
(43) Date of publication of application: **21.11.2012**
(21) Application number: 11732695.9
(22) Date of filing: 12.01.2011
(51) Int. Cl.: A01M 29/00

(54) **DEVICE FOR PREVENTING BIRDS FROM ALIGHTING AND NESTING**

(30) Priority: 13.01.2010 ES 201030022
(71) Applicant: Desinfecciones Triple D, S.L., 31500 Tudela (Navarra) (ES)
(72) Inventor: IRIZ PÉREZ, Roberto, 31500 Tudela (Navarra) (ES)
(74) Representative: Schäfer, Matthias W.
(86) International application number: PCT/ES2011/000003
(87) International publication number: WO 2011/086214

(57) **Abstract**

Device for preventing the perching and nesting of birds, characterised in that it is comprised by a geared motor which, supplied by various energy sources, operates one or more rods connected to it, performing a controlled rotation by means of programming or by laser motion detection in places where birds are to be prevented from settling, as the rods, on performing the rotation or sweep, form a moving rejection member that does not harm birds but bothers them sufficiently for them to fly off when they become aware of the rod touching them.

The invention presented herein offers the advantage of protecting a building in its entirety, preventing birds in general from settling on roofs, cornices, gutters, terraces, aerials, bell towers and electricity pylons.

## Description

This document relates, as its title indicates, to a device for preventing the perching and nesting of birds, characterised in that it is comprised by a geared motor which, supplied by various energy sources, operates one or more rods connected to it, performing a controlled rotation by means of programming or by laser motion detection in places where birds are to be prevented from settling, as the rods, on performing the rotation or sweep, form a moving rejection member that does not harm birds but bothers them sufficiently for them to fly off when they become aware of the rod touching them.

There are a countless number of birds, such as pigeons, storks, swallows, seagulls, crows, sparrows and starlings, that have become accustomed to living in urban areas, their density having increased in recent years to the extent that they have become a major problem in terms of environmental hygiene, due to the deposits and infectious germs they discharge.

The excessive proliferation of birds in urban environments has caused structural and aesthetic damage to architectural and artistic structures, as their settling on these monuments results in a large amount of damage caused by excrement, which is usually very corrosive, also damaging metal parts and accelerating corrosion.

The increasing density of birds has accentuated the problem, and the solutions used to date to scare them away have been very unsatisfactory, while solutions involving the culling or harming or birds are unacceptable to the general public.

Other types of birds such as swallows also find shelter and nest in the cornices and eaves of bell towers and buildings etc, worsening structural damage.

Other types of birds such as storks also contribute to the deterioration of urban buildings as they usually nest in tall buildings and structures such as bell towers and chimneys, causing many problems both in terms of the corrosion caused by their excrement and the weight of their nests, which can exceed 1,000 kilograms, on these structures. They also frequently nest in structures supporting power lines, thus creating an ongoing risk of damage to the line and other problems such as short circuits, causing a risk also to the storks and their young.

Attempts have been made to prevent birds such as pigeons and other birds from perching on terraces, eaves, balconies and similar places on buildings, bell towers and electricity pylons by using, for example, spikes, magnetic fields, electrical devices, chemical repellents, scarecrows, etc, to list just some of the solutions that currently exist on the market.
a) Solutions based on devices comprising spikes or tubular structures for preventing birds from perching on a specific surface.
   - Anti-bird protector for buildings, monuments and similar structures, described in Spanish utility model U 200001676.
   - Fixing support for a bird-scaring device positioned on the guttering of a building, described in Spanish utility model U 200602527.
   - Bird-scaring device, described in Spanish utility model U 200602528.
   - Device for repelling birds, described in European patent ES 2140 727. Devices essentially comprised of a diversity of blunt-tipped spikes attached to a support, which is positioned on the surface to be protected, preventing birds from settling in a certain place, with the drawback that birds may perch on parts of the same building that have not been protected.
   - Anti-nesting device for power-line supports, described in Spanish utility model U 200001905.
   - Oscillating anti-nesting frame, described in Spanish utility model U 200501875.
   - Anti-nesting device, described in Spanish utility model U 200903325. Devices essentially comprised of a diversity of metal structures for preventing storks from nesting on electricity pylons, with the drawback that although these structures are designed to make it difficult for storks to nest, the birds nevertheless achieve their aim by expending more effort and even making use of said structures.
b) Solutions based on devices generating magnetic fields for preventing birds from perching on a specific surface.
   - Magnetic device for repelling pigeons by means of a series of interconnected magnets, described in Japanese patent JP2007289134 and JP2007300905.
   - Device for preventing the nesting and settling of birds on urban buildings by means of the vibration of thin stainless steel wires, described in Spanish utility model U 9002636.
   - Apparatus for preventing birds from perching by means of the rotation of magnetic members, described in European patent ES 2128 464.
      Devices essentially comprised of a series of magnets and wires that are disposed on their ends with wires for causing a vibration and by members that create a magnetic field when rotated, all of them being designed to scare birds away, but with the same drawback as the preceding case, as they only operate in the areas where they are positioned, leaving some areas unprotected.
c) Solutions based on electrical devices generating a high-voltage discharge of a short duration and of low power for preventing birds from perching on a specific surface.
   - Electrical system adapted to scare pigeons away from buildings, by means of a static impulse generator, described in European patent ES 2060 998.
   - Current-conduction device for protecting buildings from birds by means of pairs of rigid current-conduction rods, described in European patent ES 2025 387 and ES 2182 046.
   - Electrical safety device for scaring away nuisance birds, by means of a network of bipolar electrical conductors, described in Spanish utility model U 200301625.
   Devices essentially comprised of a network of electrical conductors that produce discharges when the birds perch, with the drawback that they are costly to install and are expensive to maintain, in addition to the fact that the electrical discharges may cause lasting injury to some birds.
d) Solutions based on chemical repellents such as paints, aerosols and other substances, for preventing birds from perching on a specific surface.
   - Bird spray repellent, described in Japanese patent JP 2004159560. This spray repellent is especially designed for pigeons and sparrows and is used to impregnate places where they typically nest, instantly repelling them, as the feet of the birds are impregnated with a glue that momentarily prevents them from moving freely and generates a highly repellent and strong smell, with the drawback that although it scares away birds, they may be harmed by it, while the environment is also affected by the traces of spray left behind.
e) Solutions based on scarecrows, for preventing birds from perching on a specific surface.
   - Scarecrow, described in Spanish utility model U 200501360.

Of use in all places where certain types of bird make large and heavy nests, such as storks, it being especially useful for its fitting on electricity pylons, with the result that the scarecrow takes the form of a figure of a bird of prey disposed on a base fixed in the place to be protected, and that on seeing the figure of the bird of prey other birds do not fly to said place. The figure of the bird of prey may also move slightly, making it even more effective, and also incorporate a recording, activated regularly, mimicking the sound of the bird makes, with the drawback that its surprise effect is reduced over time and storks eventually settle in the aforementioned areas.

To address existing problems a device has been designed for preventing the perching and nesting of birds, with the aim of preventing birds such as pigeons and other birds from perching on the top part of a building, such as a terrace, roof or similar place, wherein the device ensures that birds may be reliably prevented from settling, comprised by fixed members such as a geared motor with its corresponding supply system and a relay or laser motion sensor, and by moving members such as an adapter for connection to a coupling of the geared motor or a multiple adapter and a section or sections of rod, especially adapted to the structural characteristics of the building.

It is another object of this invention to provide a device for preventing the perching and nesting of birds to prevent birds such as storks from nesting in the bell towers of churches, cathedrals, places of worship and similar places and on electricity pylons, comprised by fixed members such as a geared motor with its corresponding supply system and a relay or laser motion sensor, and by moving members such as an adapter for connection to a coupling of the geared motor or a multiple adapter and a section or sections of rod, especially adapted to the structural characteristics of the building.

It is another object of this invention to provide a device for preventing the perching and nesting of birds to prevent birds such as swallows and other birds from nesting in the eaves or cornices of buildings, comprised by fixed members such as a geared motor with its corresponding supply system and a relay or laser motion sensor, and by moving members such as an adapter for connection to the coupling of the geared motor with a fork and a plurality of fork adapters for the insertion of strip sections.

It is another object of this invention to provide a device for preventing the perching and nesting of birds to prevent birds such as swallows and other birds from nesting in the eaves or cornices of buildings with beams or casings, comprised by fixed members such as a geared motor with its corresponding supply system and a relay or laser motion sensor, and by moving members such as an adapter for connection to the coupling of the geared motor and a folded rod with projections coinciding with the beams or casing of the eave.

The supply system of the geared motor may be achieved by means of connection to the mains, by batteries, by solar panels or by wind power, etc.

It is another object of this invention to provide a system protecting an entire building by means of one or more devices for preventing the perching and nesting of birds, controlled from a control panel from which the sweeps and rotations of each of the motors of the devices positioned on the building can be programmed, as the sweep and rotations can be programmed as required so that birds trying to perch on any part of the building are constantly bothered.

This device for preventing the perching and nesting of birds, presented herein, provides numerous advantages over those currently available, the most important of them being its operability, as the structure of the device means it can be adapted to any structural area of building, either partly or in its entirety.

Another important advantage resulting from the preceding one is that any type of building is protected in its entirety thanks to the system of the invention, all the motors of each of the devices being capable of being controlled in a programmed manner, with sweeps or rotations being capable of being performed every few seconds, with the result that any area of the building is protected from any type of bird.

As an important advantage it may be added that the device for preventing the perching and nesting of birds is comprised by fixed members such as a geared motor with its corresponding supply system and a relay or laser motion sensor, and by moving members such as an adapter for connection to the coupling of the geared motor, multiple adapters, fork adapters, strips and by the corresponding sections of rod.

Another important advantage is that the supply system of the geared motor may be achieved by any of the means currently known, such as by connection to the mains, by batteries, by solar panels or by wind power, etc.

Another important advantage is that both the rods and the system of strips adapted to the device may have their rotation movement activated by means of the programming of a relay or by means of a laser motion sensor.

An important advantage is that in a second embodiment the device is disposed with strips that when connected to a series of fork adapters cover the length of an eave in its entirety, preventing swallows and birds from nesting in it, as the birds and swallows are scared away immediately when the rotation of the strips occurs.

Finally, a further important advantage is that with the system recommended herein the settling and nesting of birds is prevented, as the rods, in making the rotation or sweep, form a moving rejection member that does not harm birds but bothers them sufficiently for them to fly off when they become aware of the rod touching them.

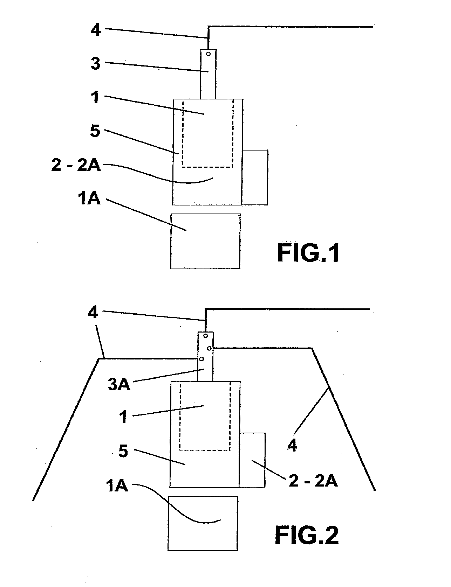

To provide a better understanding of the object of the present invention, a preferred practical embodiment of said invention is shown in the drawings attached:
In said drawings Figure 1 shows the assembly of a device for preventing the perching and nesting of birds, such as pigeons and other birds, preventing them from sitting on the top part of a building, with an adapter connected to the coupling of the geared motor and a section of rod.
Figure 2 shows the assembly of a device for preventing the perching and nesting of birds, such as pigeons and other birds, preventing them from sitting on the top part of a building, with a multiple adapter connected between the geared motor and the sections of rod.

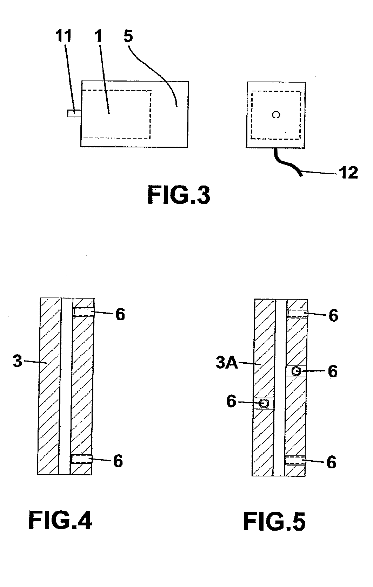

Figure 3 shows a profile and elevated view of the geared motor assembled in a hermetically sealed box.
Figure 4 shows a cross-sectional view of an adapter connected to the coupling of the geared motor and a section of rod, with its corresponding fastening bolts.
Figure 5 shows a cross-sectional view of a multiple adapter connected between the geared motor and sections of rod, with its corresponding fastening bolts.
Figure 6 shows a view of the schematic assembly of a device for preventing the perching and nesting of birds, such as pigeons and other birds, preventing them from sitting on the top part of a building.
Figure 7 shows a ground view of the schematic assembly shown in Figure 6.
Figure 8 shows a view of the schematic assembly of a device for preventing the perching and nesting of birds, such as pigeons and other birds, preventing them from sitting on the top part of a building and also on the aerial, incorporating a multiple adapter.
Figure 9 shows a view of the schematic assembly of a device for preventing the perching and nesting of birds, such as storks, preventing them from nesting in bell towers, cathedrals, churches and similar places.
Figure 10 shows a view of the schematic assembly of a device for preventing the perching and nesting of birds, such as storks, preventing them from nesting in electricity pylons.

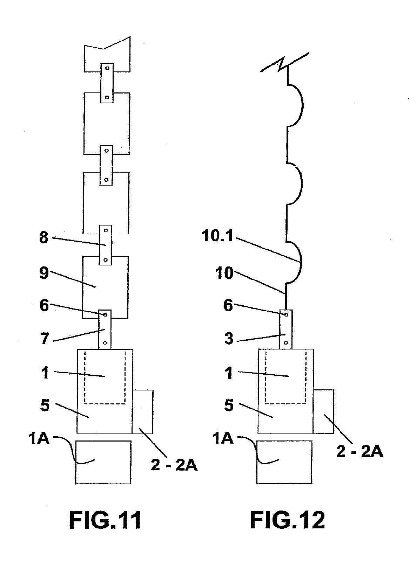

Figure 11 shows the assembly of a device for preventing the perching and nesting of birds, such as swallows or other birds, preventing them from nesting in the eaves or cornices of buildings, with an adapter connected to the coupling of the geared motor and a strip section and various fork adapters attached to its corresponding strip sections.
Figure 12 shows the assembly of a device for preventing the perching and nesting of birds, such as swallows or other birds, preventing them from nesting in the eaves or cornices of buildings constructed with beams or casing, with an adapter connected to the coupling of the geared motor and a section of rod, folded with semi-circular projections coinciding with the sections of beam.

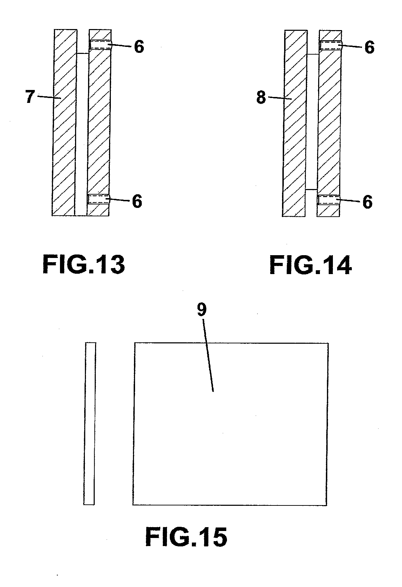

Figure 13 shows a cross-sectional view of an adapter connected between the geared motor and a strip section, with its corresponding fastening bolts.
Figure 14 shows a cross-sectional view of a fork adapter for the assembly between the strip sections, with its corresponding fastening bolts.
Figure 15 shows a profile and ground view of a strip section.
Figure 16 shows a profile view of the assembly of a device for preventing the perching and nesting of birds, such as swallows or other birds, preventing them from nesting in the eaves or cornices of buildings.
Figure 17 shows a front view of the assembly of a device for preventing the perching and nesting of birds, such as swallows or other birds, preventing them from nesting in the eaves or cornices of buildings.
Figure 18 shows a profile view of the assembly of a device for preventing the perching and nesting of birds, such as swallows or other birds, preventing them from nesting in the eaves or cornices of buildings constructed with beams or casing.
Figure 19 shows a front view of the assembly of a device for preventing the perching and nesting of birds, such as swallows or other birds, preventing them from nesting in the eaves or cornices of buildings constructed with beams or casing.

This document describes a device for preventing the perching and nesting of birds, such as pigeons and other birds, for preventing them from sitting on the top part of a building, comprised by fixed members such as: a geared motor (1) with its corresponding supply system (1A), a relay (2) or laser motion sensor (2A) and moving members such as: an adapter (3) connected to the coupling of the geared motor or a multiple adapter (3A) and a section or sections of rod (4) especially adapted to the structural characteristics of the building.

The geared motor (1) consists of a motor with a low-consumption gear and which is disposed with an adjustable degree of rotation, depending on the characteristics of its location.

The geared motor (1) is connected in a hermetically sealed box (5) protected from the elements, with a connection coupling (11) projecting outwards for the corresponding connection with the adapter (3, 3^{a}, 7 and 8) and a connection cable.

The supply system (1A) of the geared motor (1) may be achieved by any of the means currently known, such as by connection to the mains, by batteries, by solar panels or by wind power, etc.

The relay (2) or laser motion sensor (2A) are provided for the activation of the geared motor (1). If the activation is performed by means of a relay (2), positioned in its corresponding control panel or next to the geared motor (1), it may be programmed so that the sweep or rotation of the section of rod is performed constantly, with a break of a few seconds after each rotation or sweep cycle.

Additionally, if the activation is performed by means of a laser motion sensor (2A), it is positioned in line with the rod with the result that when a pigeon intercepts the laser beam emitted by the sensor, the sweep or rotation of the rod is immediate, a cycle of movement being performed, it remaining in a rest position until the beam is intercepted again.

The connection adapter (3) to be attached to the geared motor (1) and the multiple adapter (3A) are configured by a pipe section formed with stainless material, with a longitudinal through drill hole, a closure bolt (6) being disposed on each one of its ends, in order for it to be attached at one of its ends to the section of rod (4), it being attached at the opposite end to the coupling of the geared motor (1), the torque being adjusted by means of the corresponding hexagon wrench.

In addition the multiple adapter (3A) is also configured with a longitudinal through drill hole, a closure bolt (6) being disposed on each one of its ends for the attaching of the section of rod (4), it being attached at the opposite end to the coupling of the geared motor (1), the torque being adjusted by means of the corresponding hexagon wrench. It also incorporates in its middle part two facing drill holes for the insertion of the same number of sections of rod (4), it also incorporating bolts (6) for adjusting the corresponding torque on them.

The section of rod (4) consists of a rod with a thin diameter, made of a stainless and malleable material, so that it may be bent according to the inclinations or curvatures of the building where the location of the corresponding device is disposed

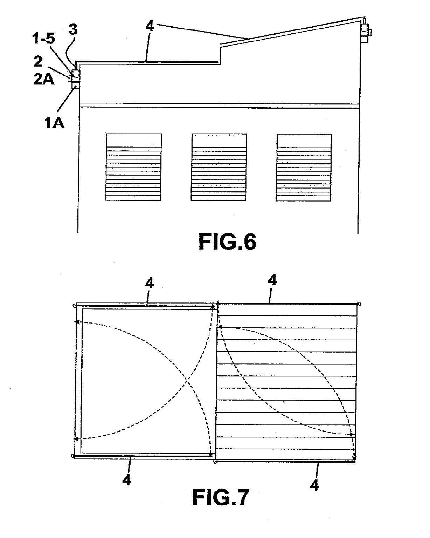

The assembly of this device for preventing the perching and nesting of birds, such as pigeons and other birds, preventing them from sitting on the top part of a building may be achieved with reference to Figure 6, where the geared motor (1) is incorporated attached to the TV aerial of the building, with just one connection adapter (3) for the protection of a roof, with the result that when the rotation is performed, the rod (4) touches the birds, causing them to fly off immediately and without damaging them, preventing them from perching on the building.

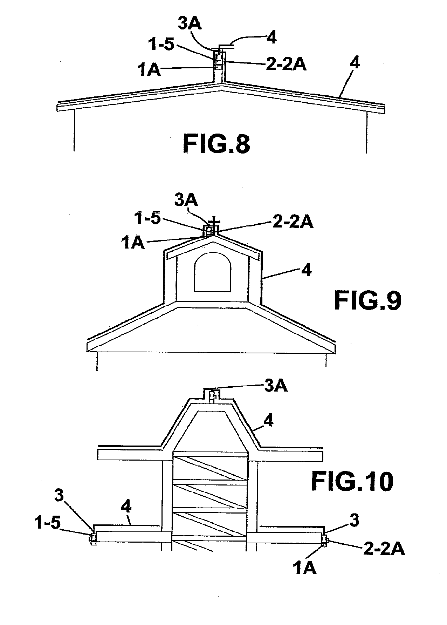

With reference to Figure 8, the geared motor (1) is incorporated attached on the TV aerial of the building, with a multiple adapter (3A) for the protection of a roof and also the aerial itself.

With reference to Figure 9, the assembly of a device for preventing the perching and nesting of birds such as storks is achieved, preventing them from nesting in bell towers, cathedrals, churches and similar places, the geared motor (1) being incorporated with a multiple adapter (3A), positioned on top of a bell tower, protecting the entire surface of the roof and the support columns.

With reference to Figure 10, the assembly of a device for preventing the perching and nesting of birds such as storks is achieved, preventing them from nesting in electricity pylons, incorporating in this case three separate devices, each geared motor (1) being positioned with a connection adapter (3), at each of the support ends of an electricity pylon, the operating relays being programmed in their corresponding control box.

A device for preventing the perching and nesting of birds such as swallows and other birds is described, preventing them from nesting in the eaves or cornices of buildings, comprised by fixed members such as a geared motor (1) with its corresponding supply system (1A) and a relay (2) or laser motion sensor (2A), and by moving members such as a fork connection adapter (7) to be attached to the coupling of the geared motor (1), a plurality of fork adapters (8) and a plurality of strip sections (9).

The fork connection adapter (7) is configured by a pipe section, formed with stainless material, with a longitudinal through drill hole, it being disposed at one of its ends with a flat surface, it being disposed at the opposite end with a groove in the form of a fork for the fastening of the strip sections (9), incorporating at each of its ends a closure bolt (6), in order for it to be attached at one of its ends to the coupling of the geared motor (1), it being attached at the opposite end to the strip sections (9), the torque being adjusted by means of the corresponding hexagon wrench.

The fork adapter (8) is configured by a pipe section, formed with stainless material, incorporating at both ends a groove in the form of a fork for fastening the strip sections (9), incorporating at each of its ends a closure bolt (6) for adjusting the torque by means of the corresponding hexagon wrench.

The strip (9) is configured by a strip section, formed with stainless material, designed to be fastened on the fork connection adapter (7) and the fork adapters (8).

A device is described for preventing the perching and nesting of birds, such as swallows and other birds, to prevent them nesting in the eaves or cornices of buildings with beams or casings, comprised by fixed members such as: a geared motor (1), programmed for a rotation of 180°, with its corresponding supply system (1A) and a relay (2) or laser motion sensor (2A), and moving members such as: a connection adapter (3) to be attached to the coupling of the geared motor (1), and a rod (10), with projections (10.1) coinciding with the beams or casing of the corresponding eave.

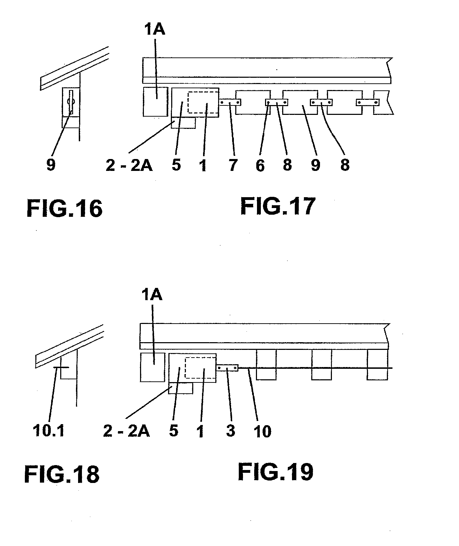

The assembly of this device for preventing the perching and nesting of birds, such as swallows and other birds, preventing them from nesting in the eaves or cornices of buildings, with reference to Figure 17, where the geared motor (1) is positioned in the eave of the roof, the entire eave being covered by means of fork adapters (7 and 8) and strip sections (9) connected to each other and fastened by means of the corresponding bolts (6), with the result that when the relay (2) or laser motion sensor (2A) activate the geared motor (1) of the device, the strips perform a rotation, scaring away the birds and preventing them from nesting.

With reference to Figure 19, a device is assembled for preventing the perching and nesting of birds, such as swallows and other birds, preventing them from nesting in the eaves or cornices of buildings constructed with beams or casing, where the geared motor (1) is positioned in the eave of the roof, the entire eave being covered by means of a connection adapter (3) and a section of rod (10) folded and fitted on to the beams of the eave, formed by semi-circular sections 10.1, performing a rotation of 180° to scare away birds attempting to nest.

## Claims

1. Device for preventing the perching and nesting of birds, **characterised in that** it causes a rotation or sweep in the structure or building to be protected by means of the collaboration of fixed members comprised by a geared motor (1) with its corresponding supply system (1A) and a relay (2) or laser motion sensor (2A), and moving members comprised by adapters (3, 3A, 7 and 8), strip sections (9) and sections of rod (4 and 10).

2. Device for preventing the perching and nesting of birds, according to claim 1, **characterised in that** the geared motor (1) consists of a motor with a low-consumption gear and which is disposed with an adjustable degree of rotation, depending on the characteristics of its location, which is connected in a hermetically sealed box (5) protected from the elements, with a connection coupling (11) projecting outwards for the corresponding connection with the adapter (3, 3A, 7 and 8) and a connection cable (12).

3. Device for preventing the perching and nesting of birds, according to claim 2, **characterised in that** the supply system (1A) of the geared motor (1) may be achieved by any of the means currently known, such as by connection to the mains, by batteries, by solar panels or by wind power.

4. Device for preventing the perching and nesting of birds, according to claims 2 and 3, **characterised in that** the relay (2), by means of programming or the laser motion sensor (2A), through the interruption of the laser's emission, is provided for the activation of the geared motor (1).

5. Device for preventing the perching and nesting of birds, according to claim 1, **characterised in that** it causes a rotation or sweep in the structure or building to be protected by means of the collaboration of moving members comprised by a connection adapter (3) to be attached to the coupling of the geared motor (1) or a multiple adapter (3A) and a section or sections of rod (4).

6. Device for preventing the perching and nesting of birds, according to claim 5, **characterised in that** the connection adapter (3) to be attached to the coupling of the geared motor (1) is configured by a pipe section, formed with stainless material, with a longitudinal through drill hole, a closure bolt (6) being disposed on each one of its ends in order for it to be attached at one of its ends to the section of rod (4), it being attached at the opposite end to the coupling of the geared motor (1), the torque being adjusted by means of the corresponding hexagon wrench.

7. Device for preventing the perching and nesting of birds, according to claims 5 and 6, **characterised in that** the multiple adapter (3A) is configured by a pipe section, formed with stainless material, with a longitudinal through drill hole, a closure bolt (6) being disposed on each one of its ends, for the attaching of a section of rod (4), it being attached at the opposite end to the coupling of the geared motor (1), the torque being adjusted by means of the corresponding hexagon wrench, its middle part incorporating two facing drill holes for the insertion of the same number of sections of rod (4), it also incorporating bolts (6) for adjusting the corresponding torque on them.

8. Device for preventing the perching and nesting of birds, according to claims 5 to 7, **characterised in that** the section or sections of rod (4) consist of a rod with a thin diameter, made of a stainless and malleable material, so that it may be bent according to the inclinations or curvatures of the building where the location of the corresponding device is disposed.

9. Device for preventing the perching and nesting of birds, according to claim 1, **characterised in that** it causes a rotation or sweep on the structure or building to be protected by means of the collaboration of moving members comprised by a fork connection adapter (7) to be attached to the coupling of the geared motor (1), a plurality of fork adapters (8) and a plurality of strip sections (9).

10. Device for preventing the perching and nesting of birds, according to claim 9, **characterised in that** the fork connection adapter (7) is configured by a pipe section formed with stainless material, with a longitudinal through drill hole, it being disposed at one of its ends with a flat surface, it being disposed at the opposite end with a groove in the form of a fork for the fastening of the strip sections (9), incorporating at each of its ends a closure bolt (6) in order for it to be attached at one of its ends to the coupling of the geared motor (1), it being attached at the opposite end to the strip sections (9), the torque being adjusted by means of the corresponding hexagon wrench.

11. Device for preventing the perching and nesting of birds, according to claims 9 and 10, **characterised in that** the fork adapter (8) is configured by a pipe section, formed with stainless material, incorporating at both ends a groove in the form of a fork for the fastening of the strip sections (9), incorporating at each of its ends a closure bolt (6) so that the torque may be adjusted by means of the corresponding hexagon wrench.

12. Device for preventing the perching and nesting of birds, according to claims 9 to 11, **characterised in that** the strip (9) is configured by a strip section, formed with stainless material, designed to be fastened on the fork connection adapter (7) and the fork adapters (8).

13. Device for preventing the perching and nesting of birds, according to claim 1, **characterised in that** it causes a rotation or sweep in the structure or building to be protected by means of the collaboration of moving members comprised by a connection adapter (3) to be attached to the coupling of the geared motor (1), and a rod (10).

14. Device for preventing the perching and nesting of birds, according to claim 13, **characterised in that** the rod (10) is disposed with semi-circular projections (10.1) formed coinciding with the beams or casing of the corresponding eave.
